Europäisches Patentamt

European Patent Office

Office européen des brevets

(19)

(11) **EP 0 867 624 B1**

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(51) Int Cl.$^6$: **F16B 13/14**, E21D 20/02

(21) Anmeldenummer: **98103350.9**

(22) Anmeldetag: **26.02.1998**

(54) **Verbundanker**

Compound anchor

Dispositif d'ancrage composite

(84) Benannte Vertragsstaaten:
**AT BE CH DE DK ES FR GB IE IT LI NL SE**

(30) Priorität: **25.03.1997 DE 19712425**

(43) Veröffentlichungstag der Anmeldung:
**30.09.1998 Patentblatt 1998/40**

(73) Patentinhaber: **UPAT GMBH & CO
D-79312 Emmendingen (DE)**

(72) Erfinder:
• **Grün, Jürgen
79268 Bötzingen (DE)**
• **Weber, Christian, Dipl.-Chem.
79312 Emmendingen (DE)**
• **Schätzle, Joachim, Dr.
79341 Kenzingen (DE)**

(56) Entgegenhaltungen:
| | |
|---|---|
| **DE-A- 3 831 683** | **US-A- 4 305 687** |
| **US-A- 4 525 103** | **US-A- 4 616 050** |

EP 0 867 624 B1

**Beschreibung**

Die Erfindung betrifft einen Verbundanker insbesondere für eine Verankerung in der Zugzone gemäß der Gattung des Anspruches 1.

Ein Verbundanker ohne Hülse oder Beschichtung mit Konusflächen gemäß Oberbegriff von Anspruch 1 ist aus US-A-4 305 687 bekannt.

Ein in der EP 0 448 952 A2 beschriebener Verbundanker verfügt über eine Ankerstange mit mehreren Konusabschnitten, die mit einer Beschichtung und einer Drahthülse als Abdeckelement versehen ist. Nach dem Aushärten des Mörtels wird um die Ankerstange eine Mörtelschale gebildet, in der sich die Ankerstange aufgrund der Beschichtung und der sich daraus ergebenden günstigen Reibungsverhältnisse im Falle einer Rißbildung verschieben kann, was zum Nachspreizen führt. Mit der über diese Konusabschnitte gestülpten Drahthülse wird einerseits die Beschichtung vor Beschädigung geschützt und andererseits eine zusätzliche Bohrlochreinigung erzielt. Die in diesem System verwendete Masse ist in der EP 0 333 719 B1 beschrieben. Die Komponenten sind in einer Glaspatrone in der Weise untergebracht, daß eine Kammer die Harzkomponente, die aus dem Ester eines Epoxidharzes mit Acryl und/oder Methacrylsäure und einem ethylenisch ungesättigten Monomer besteht, und die andere Kammer die Härterkomponente aus einem organischen Peroxid enthält.

Die Glaspatrone wird im Bohrloch mittels einer rotierenden Ankerstange zerstört und die Komponenten vermischt. Nach dem Vermengen der Komponenten entsteht eine Verbundmasse mit einem Gehalt von inerten Füllstoffen von 40-55 Gew%. Der bekannte Verbundanker ist aufgrund seiner Nachspreizmöglichkeit für Verankerungen in der Zugzone geeignet, ist jedoch wegen der erforderlichen Drahthülse und Beschichtung der Ankerstange sehr teuer in der Herstellung. Ferner ist mit diesem System ein Setzen der Ankerstange durch Einschlagen aufgrund der Drahthülse nicht möglich

Ausgehend von diesem Stand der Technik liegt der Erfindung die Aufgabe zugrunde, einen für die Zugzone geeigneten Verbundanker der eigangs genannten Art derart zu verbessern, daß dieser kostengünstig herstellbar und auch in Schlagmontage setzbar ist.

Die Lösung dieser Aufgabe wird durch die im Anspruch 1 angegebenen Merkmale erreicht.

Die mit der Verringerung der Füllstoffmenge einhergehende Reduzierung der Verbundfestigkeit nach dem Aushärten der Verbundmasse wird dadurch kompensiert, daß das Verhältnis der Bohrloch-Ringspaltfläche zum Bolzenquerschnitt auf einen Wert zwischen 0,3 und 0,5 verringert wird.

Die Eignung des erfindungsgemäßen Verbundankers in der Zugzone hängt davon ab, daß eine axiale Verschiebung der Ankerstange in der ausgehärteten Mörtelschale und damit ein Nachspreizen ermöglicht wird. Bei der Verschiebung rutschen die Konusabschnitte in den engeren Bereich der Mörtelschale nach, so daß erneut eine formschlüssige Verspannung zwischen Ankerstange und Mörtelschale eintritt.

Zur Verschiebung der Ankerstange gegenüber der Mörtelschale ist es erforderlich, daß sich die Mantelfläche der Ankerstange vollständig von der Mörtelschale ablöst, während der Verbund zwischen der Mörtelschale und der Bohrlochwandung erhalten bleibt. Ein optimales, die Ablösung der Ankerstange sicherstellendes Verhältnis der Verbundfläche zur Konusfläche ergibt sich bei einem Wert zwischen 3 und 4,5.

Durch das Zusammenwirken aller Merkmale kann bei der erfindungsgemäßen Lösung auf eine Beschichtung der Konusflächen zur Verbesserung der Gleiteigenschaften verzichtet werden. Da somit auch kein Schutz der beschichteten Flächen durch ein Abdeckelement erforderlich ist, fällt bei der Herstellung des erfindungsgemäßen Verbundankers sowohl die Beschichtung als auch die teure Drahthülse zur Abdeckung der beschichteten Konusabschnitte weg. Der erfindungsgemäße Verbundanker ist somit kostengünstig herstellbar und in der zeitsparenden Schlagmontage auch in der Zugzone bei gleichen Haltewerten wie die bekannten Verbundanker verankerbar.

Als besonders zweckmäßig hat es sich erwiesen, die Ankerstange mit mehreren gleichartigen beschichtungsfreien Konusabschnitten zu versehen, deren Konuswinkel zwischen 12° bis 20° beträgt.

In der Zeichnung ist ein Ausführungsbeispiel der Erfindung dargestellt.

Es zeigen:

Figur 1     den in einem Bohrloch eingemörtelten Verbundanker und

Figur 2     den in Figur 1 abgegebenen Schnitt A-A

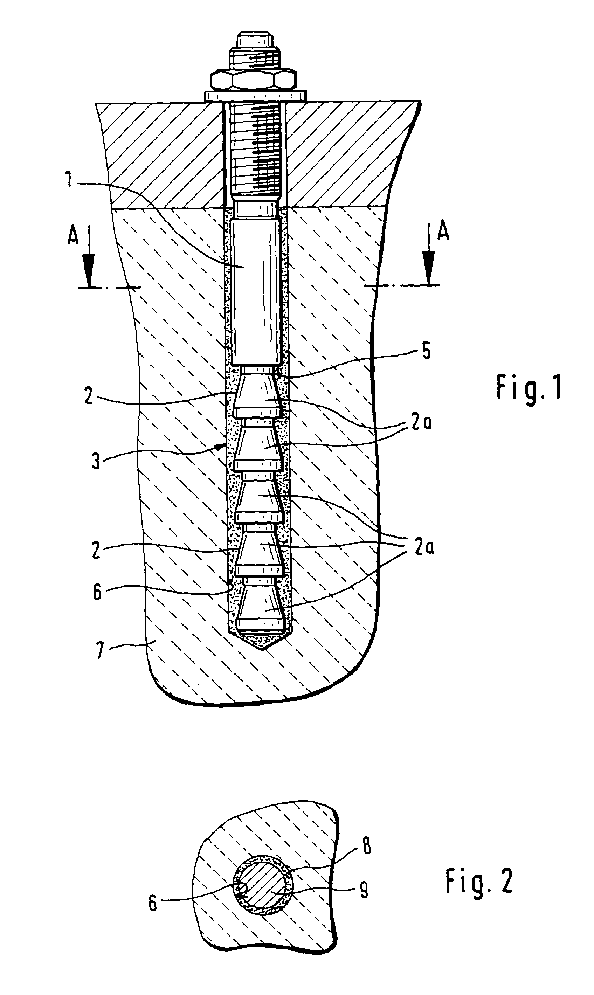

Der in Figur 1 und 2 dargestellte Verbundanker besteht aus einer Ankerstange 1, die mehrere den Verankerungsteil 3 bildenden Konusabschnitte 2 aufweist. Die Konusabschnitte besitzen jeweils eine unbeschichtete Konusfläche 2a, die in der Mörtelschale entsprechende Hohlräume ausbilden. Zwischen der Mörtelschale und der die Verbundfläche 5 bildenden Bohrlochwandung entsteht ein Verbund, der die Verankerung des Verbundankers im Bohrloch 6 des Befestigungsuntergrundes 7 bewirkt. Das Verhältnis der Verbundfläche 5 zur gesamten Konsufläche 2a aller Konusabschnitte 2 sollte zweckmäßigerweise zwischen 3 und 4,5 liegen. Ebenso sollte das Verhältnis der Bohrloch-Ringspaltfläche 8 zum Bolzenquerschnitt 9 - wie in Figur 2 - dargestellt - zwischen 0,3 und 0,5 liegen.

2

Die Harzkomponente der Verbundmasse basiert auf ungesättigten Polyesterharzen und/oder Vinylurethanharzen und/oder Epoxidharzen und/oder Polyurethanharzen und/oder Vinylesterharzen und/oder mineralischen Bindemitteln. Nachstehend werden Beispiele für die Befestigung einer Ankerstange dargestellt.

Beispiel 1 **Patrone M12 ohne inerte Füllstoffe im Harz**

| Außenpatrone | 0,8 g Härterkomponente in Pulverform mit einem Gehalt Di-Benzoylperoxid von 25 Gew% phlegmatisiert im Gips | |
|---|---|---|
| Innenpatrone | 5,6 g Vinylesterharz, das aus einem Di-ethoxylierten | |
| | Bisphenol-A-dimethacrylat | 80,00 Gew% |
| | Butandioldimethyacrylat | 10,00 Gew% |
| | 2-Hydroxyethylmethacrylat | 8,70 Gew% |
| | Di-Methylparatoluidin | 1,28 Gew% |
| | tert-Butylbrenzcatechin | 0,02 Gew% |
| | | 100,00 Gew% |

besteht.

Ankerstange gesetzt mit 4 Hammerschlägen
Ankerstange mit 5 Konen
Anschlußgewinde M12
Bohrlochdurchmesser: 14 mm
Verankerungstiefe: 100 mm
Konuswinkel: 14°
Spreizfläche: 1.300 mm$^2$
Verbundfläche: 4.400 mm$^2$
Verhältnis Verbundfläche/Spreizfläche: 3,4
Aushärtezeit: 0,5 h
gerissener Beton B25
Istfestigkeit: 38,37 N/mm$^2$
Rißbreite: 0,3 mm mittlerer Auszugswert 67,2 kN
Versagen: Stahlbruch
Rißbreite: 0,5 mm mittlerer Auszugswert 58,6 kN
Versagen: Herausziehen der Ankerstange aus der Mörtel schale
ungerissener Beton B25
Istfestigkeit: 24,5 N/mm$^2$
mittlerer Auszugswert 68,2 kN
Versagen: Stahlbruch

Beispiel 2:

| Innenpatrone | 5,6 g Mischharz aus ungesättigtem Polyesterharz auf Basis von Neopentylglykol | 20,00 Gew% |
|---|---|---|
| | - ethoxyliertes Bisphenol-A-dimethyacrylat mit einem Kondensationsgrad 1,3 | 30,00 Gew% |
| | - Oligoetheracrylat, das ein ethoxyliertes Polymonohydroxytriacrylat ist | 25,00 Gew% |
| | Di-2-hydroxyethyl-toluidin | 0,98 Gew% |
| | tert-Butylbrenzcatechin | 0,02 Gew% |
| | | 100,00 Gew% |

(fortgesetzt)

| Außenpatrone | 0,6 g Härterkomponente in Pulverform mit einem Gehalt Di-benzoylperoxid von 30 Gew% phlegmatisiert im Gips |
| --- | --- |
| | - 0,25 g Quarzsand Korngröße 0,08 - 0,2 mm |

Ankerstange gesetzt mit 5 Hammerschlägen
Ankerstange mit 5 Konen
Anschlußgewinde M12
Bohrlochdurchmesser: 14 mm
Verankerungstiefe: 100 mm
Konuswinkel: 12°
Spreizfläche: 1.465 mm$^2$
Verbundfläche: 4.400 mm$^2$
Verhältnis Verbundfläche/Spreizfläche: 3
Aushärtezeit: 0,5 h
gerissener Beton B25
Istfestigkeit: 33,4 N/mm$^2$
Rißbreite 0,5 mm mittlerer Auszugswert 54,6 kN
Versagen: Herausziehen der Ankerstange aus der Mörtelschale

Beispiel 3: **Kartusche mit zwei Vorratszylindern und einem Statikmischer**

| Vorratszylinder 1 | 50 g Härterkomponente, Dibenzoylperoxid | 20,00 Gew% |
| --- | --- | --- |
| | - Bisphenol A-epoxidharz mit einem Epoxidäquivalent 175 | 50,00 Gew% |
| | -Gips | 28,00Gew% |
| | - pyrogene Kieselsäure, hydrophobiert | 2,00 Gew% |
| | | 100,00 Gew% |
| Vorratszylinder 2 | 750 g Harzkomponente wie im Beispiel 1 | 94,40 Gew% |
| | - Flugasche Korngröße bis 0,25 mm | 1,60 Gew% |
| | - pyrogene Kieselsäure, hydrophobiert | 0,40Gew% |

Ankerstange wird von Hand eingeführt
Ankerstange mit 5 Konen
Anschlußgewinde M12
Bohrlochdurchmesser: 14 mm
Verankerungstiefe: 100 mm
Konuswinkel: 19°
Spreizfläche: 978 mm$^2$
Verbundfläche: 4.400 mm$^2$
Verhältnis Verbundfläche/Spreizfläche: 4,5

Aushärtezeit: 1 h
gerissener Beton B25
Istfestigkeit: 33,4 N/mm$^2$
Rißbreite: 0,5 mm
Auszugswert: 52 kN
Versagen: Herausziehen der Ankerstange aus der Mörtelschale

**Patentansprüche**

1. Verbundanker insbesondere für eine Verankerung in der Zugzone, der aus einer Ankerstange (1) besteht, die wenigstens einen sich in Richtung auf das Einsteckende erweiterten Konusabschnitt (2) aufweist und mittels einer Verbundmasse in einem Bohrloch (6) eines Befestigungsgrundes (7) verankerbar ist, **dadurch gekennzeichnet,** daß im verankerten Zustand der Ankerstange (1) das Verhältnis der Verbundfläche (5) zur Konusfläche (2a) zwischen 3 und 4,5, und das Verhältnis Bohrloch-Ringspaltfläche (8) zum Bolzenquerschnitt (9) zwischen 0,3 und 0,5 liegt.

2. Verbundanker nach Anspruch 1, **dadurch gekennzeichnet,** daß die Ankerstange mit mehreren gleichartigen beschichtungsfreien Konusabschnitten (2) versehen ist, deren Konuswinkel zwischen 12° bis 20° beträgt.

**Claims**

1. Composite anchor, especially for anchoring in a zone subject to tensile forces, comprising an anchoring rod (1) that has at least one conical portion (2) flaring towards the insertion end and that is arranged to be anchored in a hole (6) drilled in a mounting substrate (7) by means of a bonding compound, **characterized in that** when the anchoring rod (1) is in the anchored state the ratio of the bonding surface area (5) to the conical surface area (2a) is from 3 to 4.5, and the ratio of the surface area of the annular gap (8) in the drilled hole to the cross-section of the bolt (9) is from 0.3 to 0.5.

2. Composite anchor according to claim 1, **characterized in that** the anchoring rod is provided with a plurality of similar coating-free conical portions (2), the cone angle of which is from 12° to 20°.

**Revendications**

1. Dispositif d'ancrage composite en particulier pour un ancrage dans la zone travaillant à la traction qui est constitué d'une tige d'ancrage (1) qui présente au moins un tronçon conique (2) qui va en s'élargissant en direction de l'enfichage et qui, au moyen d'une masse composite, peut s'ancrer dans un trou percé (6) d'une base de fixation (7), caractérisé par le fait qu'à l'état ancré de la tige d'ancrage (1) le rapport entre la surface de liaison (5) et la surface conique (2a) vaut entre 3 et 4,5 et que le rapport entre la surface de la fente annulaire (8) du trou percé et la section de la tige (9) vaut entre 0,3 et 0,5.

2. Dispositif d'ancrage composite selon la revendication 1, caractérisé par le fait que la tige d'ancrage présente plusieurs tronçons coniques (2) identiques, exempts de revêtement, dont l'angle de cône vaut de 12° à 20°.

EP 0 867 624 B1

Fig.1

Fig. 2

6